Europäisches Patentamt

European Patent Office

Office européen des brevets

(11) Numéro de publication: **0 329 509 B1**

(12) **FASCICULE DE BREVET EUROPEEN**

(45) Date de publication de fascicule du brevet: **07.07.93** (51) Int. Cl.⁵: **C01B 33/141**, D21H 19/40

(21) Numéro de dépôt: **89400275.7**

(22) Date de dépôt: **01.02.89**

(54) **Suspension aqueuse stable de silice de précipitation.**

(30) Priorité: **11.02.88 FR 8801621**

(43) Date de publication de la demande:
**23.08.89 Bulletin 89/34**

(45) Mention de la délivrance du brevet:
**07.07.93 Bulletin 93/27**

(84) Etats contractants désignés:
**AT BE CH DE ES FR GB GR IT LI LU NL SE**

(56) Documents cités:
**EP-A- 0 110 762**
**DE-A- 2 721 053**
**US-A- 3 291 626**

(73) Titulaire: **RHONE-POULENC CHIMIE**
**25, quai Paul Doumer**
**F-92408 Courbevoie Cédex(FR)**

(72) Inventeur: **Dromard, Adrien**
**84, rue du Château**
**F-92600 Asnières(FR)**
Inventeur: **Richard, Claude**
**6, rue Ozanam**
**F-69001 Lyon(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex (FR)**

# Description

La présente invention concerne la préparation de suspensions aqueuses stables de silice de précipitation ainsi que leur utilisation dans l'industrie papetière.

Les suspensions ou bouillies aqueuses de silices sont utilisées dans plusieurs domaines notamment dans l'industrie papetière pour le couchage du papier.

Or, ces suspensions ont tendance à sédimenter ou à gélifier ce qui les rend difficilement transportables ou stockables. On observe en effet très souvent à l'issue du transport ou après une plus ou moins longue période de stockage la formation d'un gel ou le dépôt d'une couche dure de pigment surmontée d'une bouillie plus fluide mais pauvre en matière sèche. Il est de plus souvent impossible de remettre la silice en suspension ou d'obtenir une bouillie présentant une viscosité suffisamment faible pour être pompable et donc utilisable industriellement. Il y a donc là un problème certain.

EP-A-0110762 décrit un procédé pour améliorer les propriétés rhéologiques de suspension de silice précipitée consistant à apporter de l'aluminate à la suspension de silice, soit avec les réactifs de départ, soit au cours de la précipitation, soit sur le gâteau de filtration ou au moment du délitage.

L'objet principal de l'invention est une suspension de silice qui soit stable, non gélifiante, pompable et dispersible après plusieurs jours de stockage.

Dans ce but, la suspension aqueuse stable de silice selon l'invention comprend une silice de précipitation, constituée par un gâteau de filtration issu de la réaction de précipitation et délité ; de l'aluminium ou un composé de l'aluminium et est caractérisée en ce qu'elle comprend en outre un dispersant anionique.

On a pu constater qu'après une longue période de stockage allant de plusieurs jours à plusieurs mois, les suspensions de l' invention ne sédimentaient pas ou peu et en tout cas conservaient une viscosité convenable.

D'autres caractéristiques et avantages de l'invention seront mieux compris à la lecture de la description et des exemples concrets mais non limitatifs qui vont suivre.

La suspension selon l'invention est à base essentiellement d'une silice de précipitation. On entend par là toute silice obtenue par réaction d'un silicate avec un acide. Le mode de préparation de la silice peut être quelconque (addition d'acide sur un pied de cuve de silicate, addition simultanée totale ou partielle d'acide et de silicate sur un pied de cuve d'eau ou de solution de silicate, etc...) et il sera choisi en fonction du type de silice que l'on souhaite obtenir et donc de l'application que l'on désire faire de la suspension. A titre d'exemple on peut utiliser dans le cadre de la présente invention des silices ayant une fois séchées une surface BET selon la norme NFX 11-622 (3.3) généralement inférieure à 400 m2/g et de préférence comprise entre 50 et 400 m2/g et des prises d'huile selon la norme NFT 30-022 (mars 53) en mettant en oeuvre le phtalate de dibutyle, pouvant varier entre 50 et 400 cm3/100 g.

Selon l' invention la silice précipitée de la suspension est constituée du gâteau de filtration issu de la réaction de précipitation.
En d'autres termes, on réalise la précipitation de la silice, on filtre le milieu réactionnel et on obtient un gâteau de filtration qui est lavé si nécessaire. Ce gâteau est ensuite délité et il forme ainsi une suspension. Cette suspension peut être stabilisée selon l'invention par le système qui va être décrit ci-dessous.

Ce système comporte deux éléments.

Le premier élément est l'aluminium ou un composé de l'aluminium. Selon un mode de réalisation particulier de l'invention, l'aluminium est utilisé sous forme d'aluminate de sodium. Toutefois, on peut également, sans sortir du cadre de la présente invention, faire appel à tout composé de l'aluminium remplissant la même fonction sans altérer les propriétés de la silice tel que par exemple les chlorure, acétate, phosphate, sulfate, nitrate d'aluminium, les aluminates alcalins et alcalino-terreux.

L'aluminium ou le composé d'aluminium peut être introduit lors de la préparation même de la silice c'est-à-dire pendant la précipitation ou postérieurement. Toutefois, il est préférable de l'apporter soit sur le gâteau de filtration précité soit au moment du délitage de celui-ci.

Il est aussi préférable que la teneur en aluminium exprimée en alumine anhydre rapportée à la quantité de silice anhydre soit comprise dans une certaine plage, généralement de 500 à 10000 p.p.m.et plus particulièrement de 1000 à 6000 p.p.m. En dehors de ces limites, l'aluminium peut ne pas produire d'effet ou bien perturber la stabilisation.

Le second élément du système stabilisant est le dispersant anionique, caractéristique de l'invention.

Celui-ci est de préférence choisi dans le groupe comprenant

- les polymères d'acide acrylique et méthacrylique et leurs sels ;
- les homopolymères d'acides dicarboxyliques insaturés en $\alpha$ et $\beta$ comme par exemple les acides maléique ou itaconique.
- les copolymères d'acide (méth)acrylique avec un acide dicarboxylique insaturé en $\alpha$ et $\beta$ .

- les copolymères d'acide (méth)acrylique, d'acides dicarboxyliques insaturés en $\alpha$ et $\beta$ avec un alcène, un ester (méth)acrylate, un monomère hydrophobe copolymérisable comme par exemple le styrène ou encore un monomère hydrophile copolymérisable comme par exemple l'alcool allylique ; les polyphosphates et leurs sels de sodium, potassium et d'ammonium, les polyphosphonates et leurs sels de sodium, potassium et d'ammonium, les polysulfonates et leurs sels de sodium, de potassium et d'ammonium.

On préfère particulièrement les polyacrylates ou méthacrylates notamment de sodium, de potassium ou d'ammonium.

On utilisera de préférence les dispersants ayant un poids moléculaire moyen compris entre 1000 et 20000.

La quantité de dispersant est généralement comprise entre 0,05 et 1,5 % et notamment entre 0,1 et 0,9 % en poids par rapport à la silice anhydre.

Par ailleurs, selon un autre mode de réalisation préférentiel de l'invention, on fait subir à la silice de la suspension un broyage. On broie la silice pour obtenir essentiellement un produit ayant une répartition granulométrique plus resserrée. Cette granulométrie est telle que généralement l'indice de dispersion soit d'au plus 0,7. L'indice de dispersion est donné par le rapport :

$$\frac{d84 - d16}{2d50}$$

où le $d_n$ est le diamètre pour lequel on a n% de particules de taille inférieure à cette valeur. Le broyage est conduit de manière à obtenir par exemple une silice présentant un diamètre médian de particules compris entre 0,5 et 10 $\mu$m, plus particulièrement entré 1 et 5 $\mu$m.

On a constaté que le broyage permet d'augmenter la stabilité dans le temps de la bouillie.

Le mode de préparation de la suspension selon l'invention n'est pas critique. Généralement on mélange dans un bac la silice, la bouillie issue du délitage du gâteau et contenant la quantité nécessaire d'aluminium, avec le dispersant puis le cas échéant on passe le mélange ainsi obtenu dans un broyeur. Il serait possible toutefois de n'introduire l'aluminium et/ou le dispersant qu'après l'étape de broyage.

Le pH final de la suspension est en pratique compris entre 3 et 7 plus particulièrement entre 3 et 5,5.

Enfin, le taux de matière sèche est généralement d'au moins 15 % de préférence supérieur à 20 %.

Les suspensions stables obtenues de la manière qui vient d'être décrite peuvent être avantageusement utilisées dans l'industrie papetière pour le couchage du papier ou du carton et la préparation du papier de bas grammage.

Bien entendu, les suspensions de l'invention conviennent pour toutes les applications connues de ce type de produits comme par exemple en tant que compositions de polissage, adjuvants pour béton et matériaux de constructions, adjuvants pour peintures, encres, colles, vernis, etc...

Des exemples concrets vont maintenant être donnés.

EXEMPLE 1

On utilise un gâteau de filtration issu de la précipitation d'une silice. Ce gâteau est délité avec adjonction d'aluminate de sodium. La suspension obtenue présente une teneur en matière sèche de 21,7 %, en aluminium de 4100 p.p.m. et un pH de 5,7. La silice présente un diamètre médian de 10 $\mu$m et un indice de dispersion de 1.

On ajoute à la suspension un polyacrylate de sodium (COATEX P50 de la Société COATEX) de poids moléculaire moyen de 7000 dans une proportion de 0,5 % par rapport à la silice anhydre.

Après 5 jours de stockage on observe un volume sédimentaire (volume solide/volume total) de 5 % pour une suspension à pH 5,5.

Une légère agitation permet de remettre le produit en suspension.

EXEMPLE 2

On utilise la même suspension avec le même système stabilisant que précédemment mais on la broie par passage dans un broyeur Dyno de laboratoire type KDL.

Le volume de broyage est de 0,6 l, la vitesse de broyage est de 3000 t/mn et la suspension est introduite avec un débit de 150 cm3/minute.

On obtient une suspension d'une silice de diamètre médian de 1,9 $\mu$m avec un indice de dispersion de 0,36.

Après 60jours de stockage on observe un volume sédimentaire de 2 %. La viscosité de la suspension mesurée au viscosimètre RHEOMAT 115 est alors de 25 m.Pa.s., sa fluidité est excellente.

EXEMPLE 3 COMPARATIF

On utilise le gâteau de l'exemple 1 mais sans stabilisant.

Après 5 jours de stockage on observe une gélification totale. La remise en suspension est impossible.

EXEMPLE 4 COMPARATIF

Une silice est préparée et séchée par atomisation du gâteau délité de l'exemple 1.

Elle présente une surface BET de 180 m2/g et une prise d'huile de 300 cm3/g. Le diamètre médian est de 1,7 $\mu$m, la perte au feu à 900°C est d'au plus 11,5 %, le pH en suspension aqueuse à 5 % est de 6,8.

Elle est remise en suspension à 21,7 %. On rajoute dans la suspension le polyacrylate à la même dose que dans l'exemple 1.

Au bout de 5 jours, on observe une gélification totale.

Cet exemple montre que le comportement d'une suspension de silice obtenue à partir d'un produit fini et séché n'a rien à voir avec celui d'une suspension d'une silice issue d'un gâteau de filtration.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

**Revendications**

1. Suspension aqueuse stable de silice comprenant :
   - une silice de précipitation, constituée par un gâteau de filtration issu de la réaction de précipitation et délité,
   - de l'aluminium ou un composé de l'aluminium,
   caractérisée en ce qu'elle comprend en outre un dispersant anionique.

2. Suspension selon la revendication 1, caractérisée en ce que la teneur en aluminium exprimée en alumine anhydre rapportée à la quantité de silice anhydre est comprise entre 500 et 10000 p.p.m.

3. Suspension selon l'une des revendications précédentes, caractérisée en ce que le dispersant anionique est choisi dans le groupe comprenant :
   - les polymères d'acide acrylique et méthacrylique et leurs sels;
   - les homopolymères d'acides dicarboxyliques insaturés en $\alpha$ et $\beta$ comme par exemple les acides maléique ou itaconique ;
   - les copolymères d'acides (méth)-acrylique avec un acide dicarboxylique

insaturé en $\alpha$ et $\beta$ ;
   - les copolymères d'acide (méth)acrylique, d'acides dicarboxyliques insaturés en $\alpha$ et $\beta$ avec un alcène, un ester (méth)-acrylate, un monomère hydrophobe copolymèrisable ou encore un monomère hydrophile copolymèrisable ;
   - les polyphosphates et leurs sels de sodium, de potassium ou d'ammonium;
   - les polyphosphonates et leurs sels de sodium, de potassium ou d'ammonium ;
   - les polysulfonates et leurs sels de sodium, de potassium ou d'ammonium.

4. Suspension selon la revendication 3, caractérisée en ce que le dispersant est choisi dans le groupe des polyacrylates ou méthacrylates de sodium, de potassium ou d'ammonium.

5. Suspension selon l'une des revendications précédentes, caractérisée en ce que le dispersant anionique présente un poids moléculaire moyen compris entre 1000 et 20000.

6. Suspension selon l'une des revendications précédentes, caractérisée en ce que la quantité de dispersant est comprise entr 0,05 et 1,5 % en poids par rapport à la silice anhydre.

7. Suspension selon l'une des revendications précédentes, caractérisée en ce qu'elle a subi un broyage.

8. Suspension selon la revendication 7, caractérisée en ce que la silice présente une granulométrie telle que l'indice de dispersion soit d'au plus 0,7, cet indice étant donné par le rapport $(d_{84} - d_{16}) / 2d_{50}$ où le $d_n$ est le diamètre pour lequel on a n % de particules de taille infèrieure à cette valeur.

9. Utilisation d'une suspension selon l'une des revendications précédentes pour le couchage des papiers et cartons et la préparation de papier à bas grammage.

**Claims**

1. A stable aqueous suspension of silica comprising:
   - a precipitation silica formed by a filter cake which results from the precipitation reaction and which is slaked, and
   - aluminium or a compound of aluminium,
   characterised in that it further comprises an anionic dispersing agent.

2. A suspension according to claim 1 characterised in that the amount of aluminium expressed in terms of anhydrous alumina with respect to the amount of anhydrous silica is between 500 and 10,000 ppm.

3. A suspension according to one of the preceding claims characterised in that the anionic dispersing agent is selected from the group comprising:
- polymers of acrylic and methacrylic acid and their salts;
- homopolymers of $\alpha$ and $\beta$ unsaturated dicarboxylic acids, as for example maleic or itaconic acids;
- copolymers of (meth)acrylic acids with $\alpha$ and $\beta$ unsaturated dicarboxylic acid;
- copolymers of (meth)acrylic acid, $\alpha$ and $\beta$ unsaturated dicarboxylic acids with an alkene, a (meth)acrylate ester, a copolymerisable hydrophobic monomer or a copolymerisable hydrophilic monomer;
- polyphosphates and their sodium, potassium or ammonium salts;
- polyphosphonates and their sodium, potassium or ammonium salts; and
- polysulphonates and their sodium, potassium or ammonium salts.

4. A suspension according to claim 3 characterised in that the dispersing agent is selected from the group of sodium, potassium or ammonium polyacrylates or methacrylates.

5. A suspension according to one of the preceding claims characterised in that the anionic dispersing agent is of a mean molecular weight of between 1000 and 20,000.

6. A suspension according to one of the preceding claims characterised in that the amount of dispersing agent is between 0.05 and 1.5% by weight with respect to the anhydrous silica.

7. A suspension according to one of the preceding claims characterised in that it has been subjected to a crushing operation.

8. A suspension according to claim 7 characterised in that the silica is of a granulometry such that the dispersion index is at most 0.7, said index being given by the ratio $(d_{84}-d_{16})/2d_{50}$ in which $d_n$ is the diameter for which there are n% of particles of a size smaller than that value.

9. Use of a suspension according to one of the preceding claims for coating papers and cardboards and for the preparation of lightweight paper.

**Patentansprüche**

1. Beständige wäßrige Kieselsäure-Suspension, die umfaßt:
- eine Fällungskieselsäure, bestehend aus einem aus der Fällungsreaktion hervorgegangenen und zerteilten Filterkuchen,
- Aluminium oder eine Aluminiumverbindung,
dadurch gekennzeichnet, daß sie zusätzlich ein anionisches Dispergiermittel enthält.

2. Suspension nach Anspruch 1, dadurch gekennzeichnet, daß der Gehalt an Aluminium, ausgedrückt als wasserfreies Aluminiumoxid, bezogen auf die Menge an wasserfreier Kieselsäure, 500 bis 10 000 ppm ausmacht.

3. Suspension nach einem der vorangehenden Ansprüche, dadurch gekennzeichnet, daß das anionische Dispergiermittel aus der Gruppe ausgewählt wird, die umfaßt:
- die Polymeren von Acrylsäure und Methacrylsäure und ihre Salze;
- die Homopolymeren von $\alpha,\beta$-ungesättigten Dicarbonsäuren, wie beispielsweise Maleinsäure oder Itaconsäure;
- die Copolymeren von (Meth)acrylsäure und einer $\alpha,\beta$-ungesättigten Dicarbonsäure;
- die Copolymeren von (Meth)acrylsäure, $\alpha,\beta$-ungesättigten Dicarbonsäuren mit einem Alken, einem (Meth)acrylatester, einem copolymerisierbaren hydrophoben Monomeren oder einem copolymerisierbaren hydrophilen Monomeren;
- die Polyphosphate und ihre Natrium-, Kalium- oder Ammoniumsalze;
- die Polyphosphonate und ihre Natrium-, Kalium- oder Ammoniumsalze;
- die Polysulfonate und ihre Natrium-, Kalium- oder Ammoniumsalze.

4. Suspension nach Anspruch 3, dadurch gekennzeichnet, daß das Dispergiermittel aus der Gruppe der Natrium-, Kalium- oder Ammoniumpolyacrylate oder -methacrylate ausgewählt ist.

5. Suspension nach einem der vorangehenden Ansprüche, dadurch gekennzeichnet, daß das anionische Dispergiermittel ein mittleres Molekulargewicht von 1000 bis 20 000 aufweist.

6. Suspension nach einem der vorangehenden Ansprüche, dadurch gekennzeichnet, daß die Menge an Dispergiermittel 0,05 bis 1,5 Gew.-%, bezogen auf die wasserfreie Kieselsäure, ausmacht.

7. Suspension nach einem der vorangehenden Ansprüche, dadurch gekennzeichnet, daß sie vermahlen worden ist.

8. Suspension nach Anspruch 7, dadurch gekennzeichnet, daß die Kieselsäure eine solche Korngrößenverteilung aufweist, daß der Dispersionsindex höchstens 0,7 beträgt, wobei dieser Index durch die Beziehung $(d_{84} - d_{16})/2d_{50}$ gegeben ist, worin $d_n$ der Durchmesser ist, bei dem n% Teilchen mit einem Durchmesser unterhalb dieses Wertes vorliegen.

9. Verwendung einer Suspension nach einem der vorangehenden Ansprüche zum Streichen von Papieren und Pappen und zur Herstellung von Papier von geringem Quadratmetergewicht.